# EUROPEAN PATENT SPECIFICATION

(11) **EP 0 412 330 B1**
(45) Date of publication and mention of the grant of the patent: **16.06.1993**
(21) Application number: 90113751.3
(22) Date of filing: 18.07.1990
(51) Int. Cl.: B65G 65/48

(54) **Hopper for feeding powdered material**
Behälter zum Zuführen von pulverförmigem Material
Trémie pour l'alimentation de matériau pulvérulent

(30) Priority: 09.08.1989 IT 1256289
(43) Date of publication of application: 13.02.1991
(73) Proprietor: I.M.A. INDUSTRIA MACCHINE AUTOMATICHE S.p.A., I-40064 Ozzano dell'Emilia (IT)
(72) Inventor: Cane', Aristide, I-40068 San Lazzaro Di Savena,(Bologna) (IT)
(74) Representative: Porsia, Dino, Dr.

(56) References cited:
- EP-A- 0 201 115
- EP-A- 0 201 474
- CH-A- 659 052
- PATENT ABSTRACTS OF JAPAN vol. 10, no. 83 (M-466)(2140) 02 April 1986, & JP-A-60 223726 (EBARA SEISAKUSHO) 08 November 1985,

## Description

The present invention relates to the hoppers used to feed volumetric, rotating-drum dosers which supply dosed amounts of powdered material, for example, of medicinal type, into bottles and phials. The hoppers for such a use, according to the known prior art, are provided with detectors of the maximum level which control the inlet of the product to be fed and are provided with means for fluidizing and stirring the product, which means promote the outflow of said powdered material from the hopper so that an underlying mixing device arranged above and at a short distance from the doser and also provided with a level detector, will be filled with a pre-established and constant amount of product. The operational accuracy of the doser depends also on the accuracy with which the level of product in the mixer is maintained.

At present, each doser is associated with a respective hopper with a respective drive system and respective control logic.

A primary object of the invention is to provide a hopper for the use specified above, which comprises a single container, a single drive system and which is capable of feeding, either simultaneously or selectively, a pair of rotating-drum dosers. Such a hopper permits a considerable reduction in the number of components and the cost of the feeding apparatuses for the dosers and permits a drastic reduction of the volume of said apparatuses. The smaller volume permits reduction of the turbulence caused by said apparatuses at the interior of a shielding hood for the dosing machine, inside which a laminar flow of conditioned, sterile atmosphere is circulated. The smaller volume simplifies the sterilization of said apparatuses upon changing the product to be dispensed. Finally, the smaller volume reduces the quantity of product (often very expensive) left in a hopper on completion of a working cycle.

The characteristics of the hopper according to the invention and the advantages resulting therefrom will be apparent from the following description of a preferred embodiment thereof, shown in the Figures of the accompanying drawings, wherein:
Figure 1 is a perspective view of the hopper, its cover being removed;
Figure 2 is a top plan view of the loading space of the hopper with the paddles operating therein;
Figures 3 and 4 show further constructional details of the hopper, taken on lines III-III and IV-IV of Figure 1, respectively;
Figure 5 is a cross sectional view of one of the paddles of the hopper.

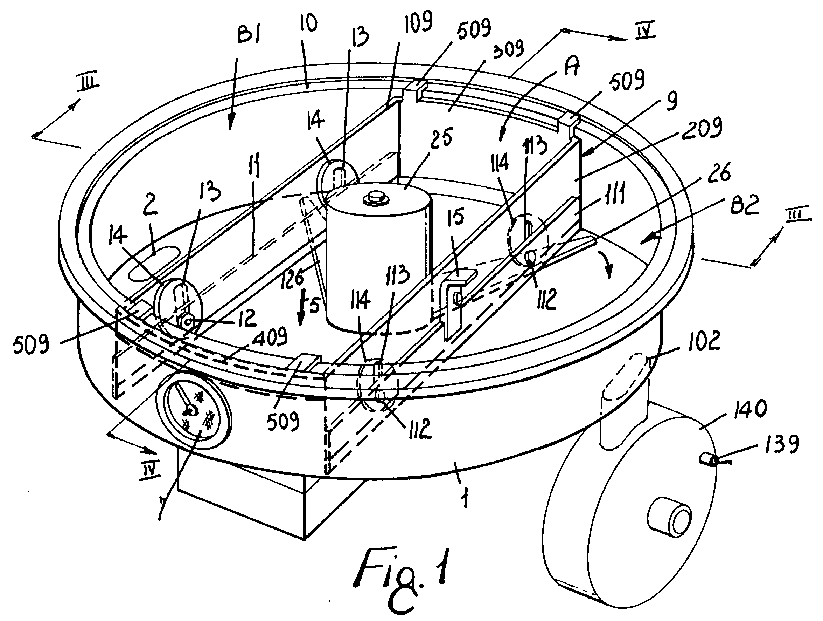

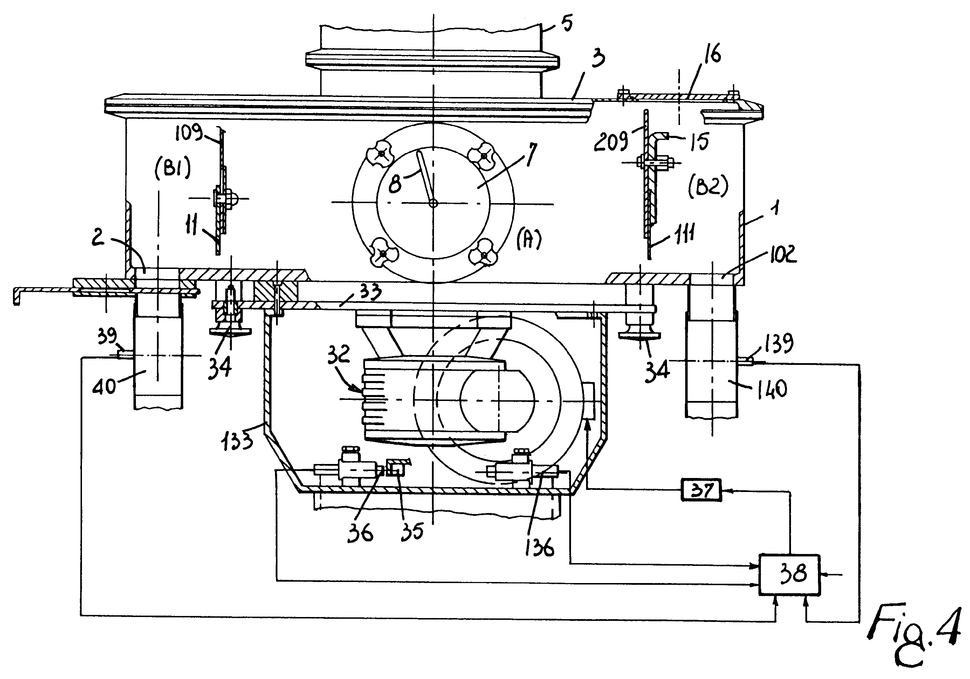

It will be appreciated from the Figures that the hopper comprises a cylindrical container 1, of round section, which has normally a vertical axis and is provided at two peripheral and diametrically opposite positions of its bottom with corresponding discharge spouts 2-102 which are connected in a known manner to respective rotating-drum dosers. Figures 1 and 4 show how the discharge spouts 2-102 are connected to the dosers in a known manner through the intermediary of respective mixers 40-140 provided with corresponding level detectors 39-139.

The container 1 is closed at the top, in a peripherally sealed manner, by a cover 3 which is provided at its periphery, in a position equally spaced from the discharge spouts 2-102, with an opening 4 to which a conduit 5 for feeding the powered product to be dosed is connected. If the product is finely micronized and very flowable, in the spout 4 there is arranged a funnel 6, which is provided at the bottom with an adjustable extension 106 which may be positioned at a short distance from the bottom of said container 1, so that the product being fed will create a plug which closes the funnel at the bottom so that said product will flow into the hopper only when suitable paddles, as disclosed below, will pass under the said funnel extension 106 and break said plug of powder.

At the inlet opening 4 for the product, the sidewall of the container 1 is provided with a small window 7 with a wiper 8, through which the operational conditions of the hopper can be visually checked.

At the interior of the hopper there is arranged diametrically a frame 9 comprising two planar, vertical, parallel and equal walls 109-209 and two curved end walls 309-409 contacting the inner side surface of the container 1 and provided with top extensions 509 which bear on a recess 10 provided at the top edge of said container 1. The curved wall 409 which faces the window 7 is constructed so as not to obstruct said window. The frame 9 divides the inner space of the container 1 into three portions of which the portions B1 and B2 outside of said frame are equal to each other and contain the discharge spouts 2-102 which, in turn, are positioned as far as possible from the parallel walls of said frame. The height of the frame 9 is such that said frame is suitably spaced from the bottom of the container 1. Mounted over the entire length of the parallel walls of the frame 9 are respective gates 11-111 equal to each other and provided with fastening bolts 12-112 passed through slots 13-113 provided in said walls and closed either by extensions integral with the gates or by washers 14-114 associated with said bolts. Each gate is provided at an intermediate position with a small handle 15, as from Figures 1 and 4, for facilitating the positioning of said gates at the required distance from the bottom of the container 1. Said gates permit the maximum level which may be reached by the product in the chambers B1 and B2 to be pre-established. Depending upon the requirements, the level of the product in the chambers B1-B2 may be either the same or different.

Provided in the cover 3 for the container 1, in registry with the gates 11-111, are respective openings with removable covers 16 which allow the means for adjusting the level of said gates to be reacted.

Centrally of the container 1 and on the bottom thereof there is provided integrally and coaxially a tubular projection 17 of round section having rotatably mounted therein, by means of a bush 18 and a bearing 19, a composite shaft 21. The numeral 20 indicates the positioning support for the bearing 19 which is protected at its top by a sealing gasket 22.

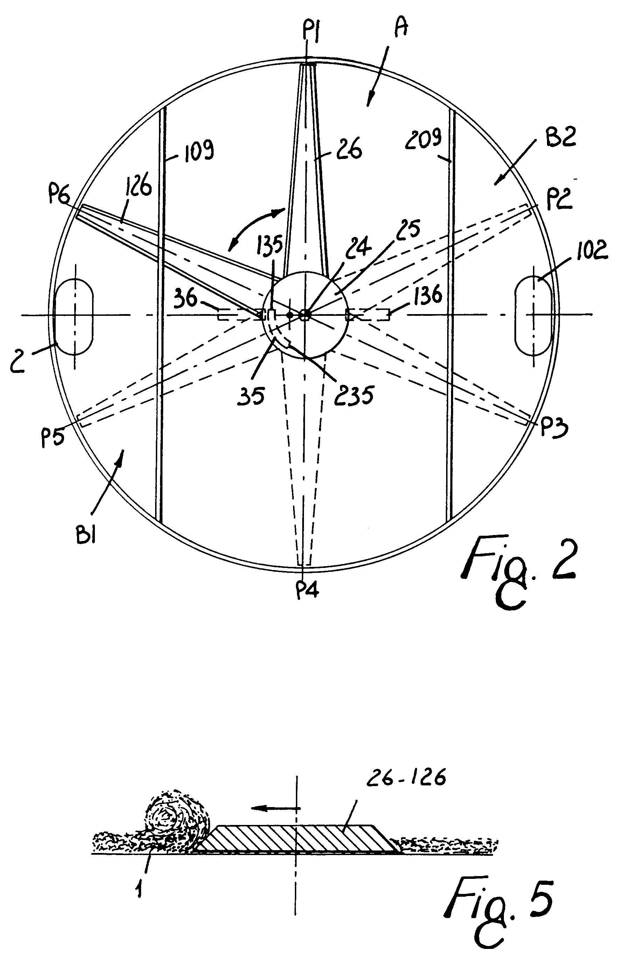

On the upper end of the shaft 21 there is keyed at 23 and axially secured by a screw 24, the top of a bell-shaped member 25 which completely surrounds the projection 17 and which integrally carries at its lower end a pair of equal paddles 26-126 arranged radially with respect to the container 1 and angularly spaced apart of about 65-70 degrees. Said paddles are of lanceolate shape as from Figure 2, are arranged flatwise at a very short distance from the bottom of the container 1 and have suitably inclined edges so as to assume a profile substantially in the form of an isosceles trapezium, as from Figure 5. Said paddles are rotated in order to fluidize the product which is fed into the central chamber A of the container 1, so that said product may flow into the chambers B1-B2 up to the level established by the gates 11-111.

Said composite shaft 21 is provided with an axial recess 27 at its lower end and is provided with an outer spider 28 by means of which it is possible to align an excentric blind hole 29 in said shaft with a pin 30 arranged on the slow-moving shaft 31 of a geared motor 32 secured on a supporting structure 33 on which there is also secured by a suitable number of suitably distributed screws 34 the bottom of the container 1 of the hopper. The shaft 31 comprises an upper tapered end portion which may be easily inserted and centered into the recess 27 of the shaft 22 carrying the fluidizing paddles. It is apparent how, thanks to the spider 28, the hopper can be easily coupled to its driving unit.

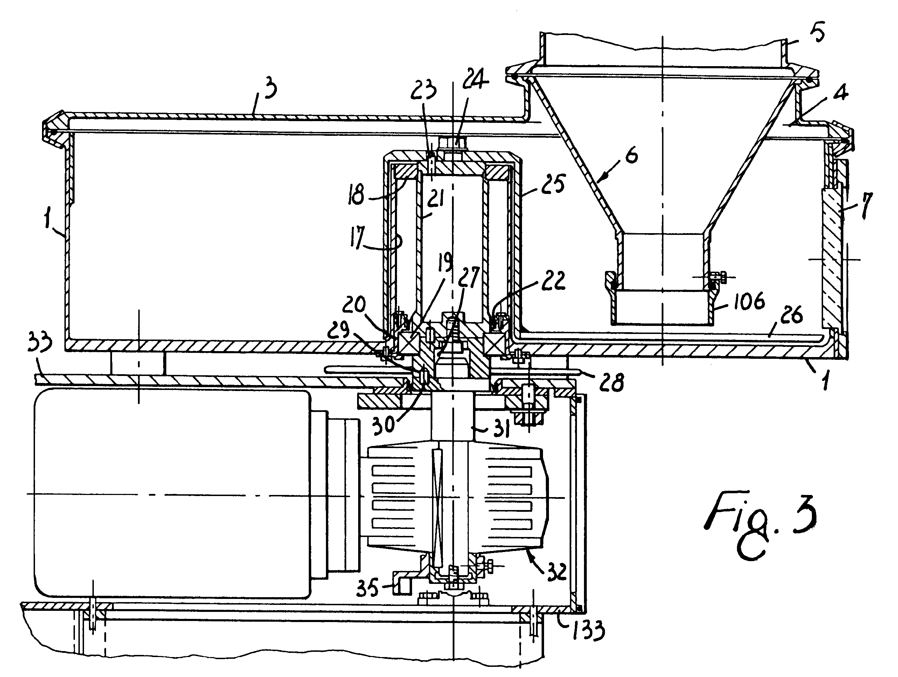

On the lower end of the shaft 31 of the geared motor 32 (see Figures 2-3-4), there is keyed with suitable orientation a cam 35 having a ring sector shape and an angular amplitude which is either equal to or slightly larger than the angular spacing between the paddles 26-126, which cam is intended to co-operate with a pair of sensors 36-136, for example of the inductive type, secured to the casing 133 shielding the geared motor 32, as shown in Figure 4.

The motor 32 is of the asynchronous type and is controlled by a unit 37 comprising an electronic rotation reverser, an electronic speed variator and which, in turn, is controlled by a control logic 38 which receives the signals from the sensors 36-136 and the signals from the level detectors 39-139 of the mixers 40-140.

The hopper described above operates as follows:

During the operative cycle of the hopper, any one or both of the detectors 39-139 may demand product. If the product is, for example, required by the detector 39, therefore by the spout 2, the paddles 26-126 are at rest in the positions P1-P6 shown with solid lines in Figure 2. The cam 35 is in the position shown with broken lines and its end 135 co-operates with the proximity sensor 36. Cyclically, the paddles will be oscillated in the anticlockwise direction to the positions indicated at P4-P5, after which they will be returned to the rest position. The cam 35 has been moved from the position of Figure 2 to a position at which its end 235 co-operates with the sensor 136. The frequency of the oscillation is pre-established and is proportional to the flow of product to be discharged through the spout 2.

If, on the contrary, the product is demanded by the detector 139, the paddles 26-126 will be oscillated in the clockwise direction to the positions P3-P4. The end 135 of the cam 35 will co-operate with the sensor 136 to reverse the rotation of the paddles. In the successive stroke to the rest position, the paddles will be stopped when the end 235 of the cam 35 will co-operate with the sensor 36. The rest position assumed by the paddles, in this case, is shown at P1-P2.

If the product is demanded by both detectors 39-139, the paddles 26-126 will be rotated continuously, for example, in the clockwise direction and at a speed which is higher than the oscillation speed in the operative cases discussed above, so that the frequency of travel of said paddles over the individual discharge spouts will be substantially unchanged.

The product being admitted into the portion A of the hopper is fluidized by the cyclic passage of the paddles and also thanks to the particular lanceolate configuration and particular outline of said paddles it is distributed in the required amount into the side portions B1-B2 of the hopper where the discharge spouts 2-102 are provided.

The bottom wall of the container 1 is machined to a perfectly flat and smooth condition. This condition permits the paddles 26-126 to operate at a very short distance from said bottom wall, whereby any accumulation of product in the container 1 is avoided. The roundness of the container 1 and the absolute absence of dead spaces avoid any stagnation of product. The hopper of the invention permits operation with a limited amount of product within the container 1, with considerable advantages in case of any interruption in the dosing of product. This condition also facilitates the checking of the product to be sent to the dosers.

## Claims

1. A hopper for feeding powdered material to dosers, comprising:
- a cylindrical container (1), arranged with its axis in vertical position and having a bottom which is perfectly flat and provided, at diametrically opposite positions, with at least two discharge spouts (2-102) to which respective dosers are connected;
- a structure (9) which is mounted in a removable manner within said container for dividing the inner volume thereof into three portions, namely a central portion (A) and two equal, opposite side-portions (B1-B2) in which there are located said discharge spouts (2-102), the dividing parallel walls (109- 209) of said structure being suitably spaced upwards from the bottom of the container, said walls having mounted thereon, so as to be adjustable in level, gates (11-111) which enable to adjust the level of the powdered material in the portions provided with the discharge spouts;
- a cover (3) removably mounted on the top of said container (1) and provided with an opening (4) at one of the ends of said central portion (A) defined within the inner volume of the container by said structure (9), said opening being connected to a conduit (5) for supplying the powdered material to be fed to the dosers;
- at least one paddle (26) arranged at a very short distance from the bottom of the container (1) of the hopper and oriented radially of said container and such as to operate across the entire extent therof, integral with and overhanging from a hub (25) which is arranged co-axially in said container and coupled to a rotating unit (32);
- reference means comprising at least one cam (35) keyed on any one of the shafts of the kinematic chain actuating the paddle-carrying hub (26) and further comprising stationary sensors (36-136) suitably distributed over the round angle, which detect the angular position of said cam, and an electronic circuit (37-38) pre-set for actuating said kinematic chain in such a manner that if the powdered material is to be fed to one of the two discharge spouts (2-102) of the hopper, the paddle is actuated with alternating movement so as to travel above said spout, to reach the area in the hopper where the material is fed, and to return to its starting position with a reverse movement, travelling again above said spout, so as to fluidize the product and to urge it towards said spout, while said paddle is rotated continuously and at a suitably higher speed than the previous oscillatory speed if both spouts are to be served.

2. A hopper according to claim 1, characterized by the fact of comprising two flat lanceolate paddles (26-126) having the profile of an isosceles trapezium and disposed flatwise at a very short distance from the bottom of the container (1) of the hopper, and angularly spaced apart by an angle smaller than 90°, preferably of the order of 65°-70°.

3. A hopper according to claim 1, characterized by the fact that the cam (35) detecting the angular position of the paddles (26-126) has a ring sector shape having an angular amplitude which is substantially equal to or slightly larger than the angular distance between said paddles and said cam co-operates alternately with two sensors (36-136) which are fixed and angularly spaced apart of 180°, the arrangement being such that when the device is at rest and the discharge spouts of the hopper are to be served one at a time, one of the two paddles is located opposite to the conduit (5) feeding the material into the hopper and the other paddle is in the area of the hopper (B1 or B2) where the product is to be fluidized, whereby when the paddles are oscillated the latter paddle will reach the product supply area, whereafter the rotation of the paddles will be reversed, so that during each complete oscillation the two paddles will travel four times over the spout to be served.

4. A hopper according to claim 3, characterized by the fact that it comprises means whereby, when the discharge spouts (2-102) of said hopper are both to be served and the fluidizing paddles (26-126) are rotated continuously, the speed of rotation is such that the frequency of travel of said paddles over each spout is substantially the same as that of the operative situation with oscillatory motion.

5. A hopper according to claim 1, characterized by the fact that the geared motor unit (32) for rotating the paddles (26-126) comprises a motor of the asynchronous type, actuated by means of an electronic rotation reverser (37), an electronic speed variator and a suitable control logic (38) which receives the signals from the sensors (36-136) of the cam (35) and from level detectors (39-139) associated to mixers (40-140) feeding the dosers.

6. A hopper according to claim 1, characterized by the fact that if the powdered material to be fed is very flowable, a funnel (6) is arranged at the end portion of the conduit (5) which discharges said material into the container (1) of the hopper, and means are provided to adjust the spacing of said funnel or of its end portion (106) from the bottom of said container, so as to restrain the flow of material.

7. A hopper according to claim 1, characterized by the fact that the paddles (26-126) are integral with a bell-shaped member (25) which is removably secured to the top end of a shaft (21) which is rotatably supported by a bush (17) which is co-axially secured in the hopper, said shaft being provided, on the portion protruding downwards out of the hopper, with a spider (28) to facilitate the coupling of said shaft with the slow-moving shaft of the geared motor unit (32).

## Patentansprüche

1. Behälteranordnung zum Zuführen von pulverförmigen Material, **gekennzeichnet durch**
- einen zylindrischen Behälter (1), der mit seiner Achse in vertikaler Lage angeordnet ist und der einen Boden hat, der vollständig flach ist und der an einander gegenüber liegenden Stellen wenigstens zwei Abgabeöffnungen (2 - 102) hat, mit denen jeweils Dosierer verbunden sind, durch
- eine Struktur (9), die abnehmbar im Behälter angeordnet ist, um dessen Innenvolumen in drei Abteile zu unterteilen, nämlich in einen Mittelteil (A) und in zwei gleiche, an entgegengesetzten Seiten vorgesehene Seitenteile (B1 - B2), in denen die Abgabeöffnungen (2 - 102) angeordnet sind, wobei parallelen Trennwände (109 - 209) der Struktur sich vom Boden des Behälters unter geeignetem Abstand nach ober erstrecken und wobei an den Wänden Tore (11 - 111) befestigt sind, die in ihrer Höhe einstellbar sind, so daß die Höhe des pulverförmigen Materials in den Abteilen mit den Abgabeöffnungen eingestellt werden kann, durch
- einen Deckel (3), der abnehmbar an der Oberseite des Behälters (1) vorgesehen ist und der mit einer Öffnung (4) an einem der Enden des Mittelteils (A) versehen ist, das im Innenvolumen des Behälters durch die Struktur (9) ausgebildet ist, wobei die Öffnung mit einer Leitung (5) für die Zufuhr des zu den Dosierern zufördernden pulverförmigen Materials verbunden ist, durch
- wenigstens einen Flügel (26), der in einem sehr geringen Abstand über dem Boden des Behälters (1) der Behälteranordnung angeordnet ist und der zum Behälter radial ausgerichtet ist derart, daß er über dessen gesamte Erstreckung arbeitet, wobei der Flügel einstückig mit einer Nabe (25) ist und an der Nabe hängt, die koaxial im Behälter angeordnet ist und die mit einer sich drehenden Baueinheit (32) verbunden ist, und durch
- Bezugsmittel mit wenigstens einer Nocke (35), die mit einer beliebigen Welle der kinematischen Kette verbunden ist, die die den Flügel tragende Nabe (26) betätigt, mit stationären Sensoren (36 - 136), die geeignet über den runden Winkel verteilt angeordnet sind und die die Winkellage der Nocke nachweisen, und mit einer elektronischen Schaltung (37 - 38), die zum Betätigen der kinematischen Kette derart voreingestellt ist, daß der Flügel, wenn das pulverförmige Material zu einer der beiden Abgabeöffnungen (2 - 102) der Behälteranordnung zu fördern ist, mit einer alternierenden Bewegung betätigt wird, so daß er über die Abgabeöffnung streicht, um das Gebiet in der Behälteranordnung zu erreichen, wo das Material gefördert wird, und um mit einer umgekehrten Bewegung zu seine Ausgangslage zurückzukehren, wobei er wieder über die Abgabeöffnung streicht, um das Produkt fließfähig zu machen und um es zu der Abgabeöffnung zu zwingen, während sich, wenn beide Abgabeöffnungen bedient werden sollen, der Flügel kontinuierlich und mit einer um eine geeignetes Maß höheren Geschwindigkeit dreht als die vorherige Oszillationsgeschwindigkeit.

2. Behälteranordnung nach Anspruch 1,
**dadurch gekennzeichnet,**
daß zwei flache, lanzettförmige Flügel (26 - 126) vorgesehen sind, die das Profil eines gleichschenkligen Trapezes haben und die flach und in einem sehr geringen Abstand über dem Boden des Behälters (1) der Behälteranordnung angeordnet sind und die voneinander über einen Winkel von weniger als 90° getrennt sind, vorzugsweise in der Größenordnung von 65° bis 70°.

3. Behälteranordnung nach Anspruch 1,
**dadurch gekennzeichnet,**
daß die dem Nachweis der Winkellage der Flügel (26 126) dienende Nocke (35) die Form eines Ringabschnitts hat mit einer Winkelamplitude, die im wesentlichen gleich oder etwas größer ist als der Winkelabstand zwischen den Flügeln, wobei die Nocke alternierend mit zwei Sensoren (36 - 136) zusammenarbeitet, die fest sind und die über einen Winkel von 180° voneinander beabstandet sind, wobei die Anordnung derart ist, daß, wenn sich die Anordnung im Ruhezustand befindet und wenn die abgabeöffnungen der Behälteranordnung eine nach der anderen bedient werden sollen, daß sich dann einer der zwei Flügel gegenüber derjenigen Leitung (5) befindet, die das Material in die Behalteranordnung fördert, und der andere Flügel in demjenigen Bereich (B1 oder B2) der Bahälteranordnung, in dem das Produkt fließfähig gemacht werden soll, wobei, wenn die Flügel hin und her gehen, der letztgenannte Flügel das Gebiet für die Zufuhr des Produkts erreicht, worauf die Drehung der Flügel umgekehrt wird, so daß bei jedem vollständigen Oszillieren die beiden Flügel viermal die zu bedienende Abgabeöffnung überstreichen.

4. Behälteranordnung nach Anspruch 3,
**dadurch gekennzeichnet,**
daß Mittel vorgesehen sind, durch die, wenn die Abgabeöffnungen (2 - 102) der Behälteranordnung beide bedient werden sollen, und wenn die fließfähig machenden Flügel (26 - 126) kontinuierlich gedreht werden, die Drehgeschwindkeit so ist, daß die Frequenz des Überstreichens der Flügel über jede Abgabeöffnung im wesentlichen gleich derjenigen ist wie bei der oszillierenden Bewegung.

5. Behälteranordnung nach Anspruch 1,
**dadurch gekennzeichnet,**
daß die Getriebemotoreinheit (32) zum Drehen der Flügel (26 - 126) einen Asynchronmotor aufweist, der über einen elektronischen Drehrichtungsumkehrer (37), einen elektronischen Geschwindigkeitssteller und über eine geeignete Steuerung (38) gesteuert wird, die die Signale von den Sensoren (36 - 136) der Nocke (35) und von Detektoren (39 -139) für die Höhe erhält, die an Mischer (40 - 140) angeschlossen sind, die die Dosierer beliefern.

6. Behälteranordnung nach Anspruch 1,
**dadurch gekennzeichnet,**
daß, falls das zu fördernde Material sehr fließfähig ist, ein Trichter (6) an demjenigen Endteil der Leitung (5) vorgesehen ist, das das Material in den Behälter (1) der Behälteranordnung abgibt, und daß Mittel vorgesehen sind, um den Abstand der Trichters oder von dessen Endteil (106) vom Boden des Behälters einzustellen, um den Materialfluß zu begrenzen.

7. Behälteranordnung nach Anspruch 1,
**dadurch gekennzeichnet,**
daß die Flügel (26 - 126) einstückig mit einem glockenförmigen Teil (25) ausgebildet sind, das lösbar am oberen Ende einer Welle (21) befestigt ist, die von einem Rohrstück (17) gestützt ist, das in der Behälteranordnung koaxial befestigt ist, wobei die Welle an demjenigen Teil, das nach unten aus der Behälteranordnung vorsteht, einen Armkranz (28) aufweist, um das Ankuppeln der Welle an die sich langsam bewegende Welle der Getriebmotoreinheit (32) zu erleichtern.

## Revendications

1. Une trémie pour alimenter des doseurs avec une matière pulvérulente, comprenant :
- une enceinte cylindrique (1) disposée avec son axe en position verticale, et ayant un fond qui est parfaitement plan et qui comporte, dans des positions diamétralement opposées, au moins deux orifices d'évacuation (2-102) auxquels des doseurs respectifs sont raccordés;
- une structure (9) qui est montée d'une manière amovible à l'intérieur de l'enceinte, pour diviser le volume intérieur de celle-ci en trois parties, à savoir une partie centrale (A) et deux parties latérales égales et opposées (B1-B2), dans lesquelles se trouvent les orifices d'évacuation (2-102), les cloisons parallèles de division (109-209) de cette structure étant espacées de façon appropriée du fond de l'enceinte, en étant placées au-dessus de ce fond, et ces cloisons portant des volets (11-111) qui sont montés sur les cloisons de façon que leur niveau soit réglable, ces volets permettant de régler le niveau de la matière pulvérulente dans les parties qui sont munies des orifices d'évacuation;
- un couvercle (3) monté de façon amovible à la partie supérieure de l'enceinte (1) et comportant une ouverture (4) à l'une des extrémités de la partie centrale (A) qui est définie par la structure précitée (9) dans le volume intérieur de l'enceinte, cette ouverture étant raccordée à un conduit (5) pour l'introduction de la matière pulvérulente destinée à être fournie aux doseurs;
- au moins une palette (26) disposée à une très faible distance du fond de l'enceinte (1) de la trémie, et orientée radialement par rapport à l'enceinte et de manière à agir sur la totalité de l'étendue de cette dernière, cette palette étant formée en une seule pièce avec un moyeu (25), et s'étendant en porte-à-faux à partir du moyeu, ce dernier étant disposé de façon coaxiale dans l'enceinte et accouplé à un dispositif de rotation (32);
- des moyens de référence comprenant au moins une came (35) clavetée sur l'un quelconque des arbres de la chaîne cinématique qui actionne le moyeu de support de palette (26), et comprenant en outre des capteurs fixes (36-136) répartis de façon appropriée sur l'angle de rotation, qui détectent la position angulaire de la came, et un circuit électronique (37-38) qui est préréglé de façon à actionner la chaîne cinématique d'une manière telle que si la matière pulvérulente doit être fournie à l'un des deux orifices d'évacuation (2-102) de la trémie, la palette est actionnée avec un mouvement alternatif de façon à se déplacer au-dessus de cet orifice, à atteindre la zone dans la trémie dans laquelle la matière est introduite, et à retourner vers sa position de départ avec un mouvement inverse, en passant à nouveau au-dessus de l'orifice précité, de manière à fluidiser le produit et à l'entraîner vers cet orifice, tandis que la palette est mise en rotation de façon continue et avec une vitesse supérieure, de façon appropriée, à la vitesse d'oscillation précédente, si les deux orifices doivent être alimentés.

2. Une trémie selon la revendication 1, caractérisée par le fait qu'elle comprend deux palettes lancéolées planes (26-126) ayant le profil d'un trapèze isocèle, et disposées à plat à une très courte distance du fond de l'enceinte (1) de la trémie, avec un écartement angulaire mutuel d'un angle inférieur à 90°, de préférence de l'ordre de 65°-70°.

3. Une trémie selon la revendication 1, caractérisée par le fait que la came (35) qui détecte la position angulaire des palettes (26-126) présente une forme de secteur annulaire ayant une étendue angulaire qui est pratiquement égale ou légèrement supérieure à la distance angulaire entre les palettes, et cette came coopère alternativement avec deux capteurs (26-126) qui sont fixes et ont un écartement angulaire mutuel de 180°, la configuration étant telle que lorsque le dispositif est au repos et les orifices d'évacuation de la trémie doivent être alimentés un à la fois, l'une des deux palettes est placée face au conduit (5) qui introduit la matière dans la trémie et l'autre palette se trouve dans la zone de la trémie (B1 ou B2) dans laquelle le produit doit être fluidisé, grâce à quoi lorsque les palettes sont mises en oscillation, la palette mentionnée en dernier atteint la zone d'alimentation en produit, après quoi la rotation des palettes est inversée, ce qui fait que pendant chaque oscillation complète les deux palettes passent quatre fois sur l'orifice à alimenter.

4. Une trémie selon la revendication 3, caractérisée par le fait qu'elle comprend des moyens grâce auxquels, lorsque les orifices d'évacuation (2-102) de la trémie doivent tous deux être alimentés, et les palettes de fluidisation (26-126) sont mises en rotation de façon continue, la vitesse de rotation est telle que la fréquence du passage des palettes sur chaque orifice est pratiquement égale à celle de la situation de fonctionnement avec un mouvement oscillant.

5. Une trémie selon la revendication 1, caractérisée par le fait que le dispositif à moteur et engrenages (32) pour la rotation des palettes (26-126) comprend un moteur du type asynchrone, actionné au moyen d'un inverseur de rotation électronique (37), d'un variateur de vitesse électronique et d'une logique de commande appropriée (38) qui reçoit les signaux provenant des capteurs (36-136) de la came (35), et de détecteurs de niveau (39-139) qui sont associés à des mélangeurs (40-140) alimentant les doseurs.

6. Une trémie selon la revendication 1, caractérisée par le fait que si la matière en poudre qui doit être fournie est très fluide, un entonnoir (6) est disposé à la partie d'extrémité du conduit (5) qui introduit la matière dans l'enceinte (1) de la trémie, et des moyens sont prévus pour régler l'écartement de cet entonnoir, ou de sa partie d'extrémité (106), par rapport au fond de l'enceinte, afin de restreindre l'écoulement de la matière.

7. Une trémie selon la revendication 1, caractérisée par le fait que les palettes (26-126) sont formées d'un seul tenant avec une pièce en forme de cloche (25) qui est fixée de façon amovible à l'extrémité supérieure d'un arbre (21) qui est supporté de façon tournante par une douille (17) qui est fixée en position coaxiale dans la trémie, cet arbre comportant un croisillon (28), sur la partie qui fait saillie vers le bas à l'extérieur de la trémie, dans le but de faciliter l'accouplement de cet arbre avec l'arbre à mouvement lent du dispositif à moteur et engrenages (32).
